# EUROPEAN PATENT APPLICATION

(11) **EP 1 433 759 A1**
(43) Date of publication of application: **30.06.2004**
(21) Application number: 02762949.2
(22) Date of filing: 02.09.2002
(51) Int. Cl.: C03C 3/105, C03C 4/08, H01J 29/86

(54) **FUNNEL GLASS FOR CATHODE−RAY TUBE**

(30) Priority: 05.09.2001 JP 2001268167
(71) Applicant: NIPPON ELECTRIC GLASS COMPANY, Limited, Otsu-shi, Shiga 520-8639 (JP)
(72) Inventor: MIWA, Y., c/o NIPPON ELECTRIC GLASS CO., LTD., Otsu-shi, Shiga 520-8639 (JP)
(74) Representative: Tetzner, Michael, Dipl.-Ing.
(86) International application number: PCT/JP2002/008862
(87) International publication number: WO 2003/022765

(57) **Abstract**

A funnel glass for a cathode ray tube contains, in mass percent, 48-62% SiO₂, 1.4-4.1%Al₂O₃, 5-15% PbO, 0-2% MgO, 0.1-4% CaO, 3-8% SrO, 3-8% BaO, 0-2% ZnO, 4-9% Na₂O, 4-9% K₂O, 0.3-2% ZrO₂, 0-1% TiO₂, 0-1% CeO₂, 0-2% Sb₂O₃, and 0.03-1% Fe₂O₃. The value of (SrO+BaO)/PbO is within the range of 1.0-3.2. The value of Al₂O₃/PbO is within the range of 0.13-0.4. The funnel glass has an X-ray absorption coefficient of 40cm⁻¹ or more at 0.6Å.

## Description

### Technical Field

This invention relates to a funnel glass for a cathode ray tube.

### Background Art

An envelope of a cathode ray tube comprises a panel glass for projecting video images, a tubular neck glass with an electron gun arranged therein, and a flare-shaped funnel glass connecting the panel glass and the neck glass. Electron beams emitted from the electron gun excite phosphors arranged on an inner surface of the panel glass to emit light so that the video images are projected on the panel glass. At this time, X-rays bremsstrahlung are produced inside the cathode ray tube. X-rays bremsstrahlung adversely affect human bodies when leaked to the exterior of the tube through the envelope. Therefore, the envelope of this type is required to have a high X-ray absorbability.

In this connection, as the funnel glass or the neck glass, use is made of a lead glass which contains 15 % or more PbO having a high X-ray absorbability so as to have an X-ray absorption coefficient of 40 cm⁻¹ or more. In particular, since the neck glass is thin in thickness, a yet higher X-ray absorption coefficient is required. Consequently, as the neck glass, use is made of a lead glass which contains 20 % or more PbO so as to have an X-ray absorption coefficient of 80 cm⁻¹ or more.

On the other hand, the panel glass is strictly required not to be colored due to the electron beams and the X-rays. Therefore, as the panel glass, use is made of a glass which contains SrO and BaO so as to have an X-ray absorption coefficient of 28 cm⁻¹ or more, instead of PbO which may cause coloration due to the electron beams and the X-rays.

Generally, the panel glass and the funnel glass are bonded to each other by a PbO frit. The funnel glass and the neck glass are bonded to each other by fusing.

In recent years, it is strongly desired to reduce the amount of wastes, to prevent environmental pollution caused by harmful components, and to reuse resources. In this context, recycling of a bulb glass of a cathode ray tube is promoted. Upon recycling, the bulb glass of a cathode ray tube is first separated into individual parts, i.e., the panel glass, the funnel glass, and the neck glass. Next, each part is immersed into a chemical solution to remove phosphors, carbon DAG, frits, and so on. Subsequently, each part is crushed and washed to obtain glass pieces which are used as a glass material for each part. In the above-mentioned manner, recycling is carried out. In recycling, the bulb glass of a cathode ray tube is completely separated into individual parts. The reason is as follows. For example, if any glass containing PbO, such as the funnel glass or the neck glass, is mixed into a material of the panel glass, coloring due to the electron beams and the X-rays will occur in the panel glass produced by the use of the material.

In view of the influence on the environment, the amount of the bulbs of cathode ray tubes which are disposed of by landfill is reduced while the amount of the bulbs of cathode ray tubes which should be recycled is increased. However, for the panel glass having a strict tolerance against glass defects such as bubbles or devitrifying stones, it is difficult to use a large amount of the glass pieces of the crushed panel glass as a material. Therefore, it is considered to recycle, as the material of the funnel glass, the glass pieces of the panel, which are not completely consumed but remain unused.

However, the panel glass has an X-ray absorption coefficient lower than that of the funnel glass. Therefore, in case where the glass pieces of the panel are used as the material of the funnel glass, the X-ray absorption coefficient is decreased. In addition, other required characteristics are also changed. From the above-mentioned reasons, the glass pieces of the panel are used only in a small amount and are continuously increasing.

As described above, the bulb glass of the cathode ray tube is completely separated into individual parts. This is troublesome and increases product cost.

Therefore, it is an object of the present invention to provide a funnel glass for a cathode ray tube, which satisfies a required characteristic even if a material containing a large amount of glass pieces of a bulb for a cathode ray tube is used.

### Disclosure of the Invention

According to an aspect of the present invention, there is provided a funnel glass for a cathode ray tube, which contains, in mass percent, 48-62% SiO₂, 1.4-4.1%Al₂O₃, 5-15% PbO, 0-2% MgO, 0.1-4% CaO, 3-8% SrO, 3-8% BaO, 0-2% ZnO, 4-9% Na₂O, 4-9% K₂O, 0.3-2% ZrO₂, 0-1% TiO₂, 0-1% CeO₂, 0-2% Sb₂O₃, and 0-1% Fe₂O₃ with the value of (SrO+BaO)/PbO being within the range of 1.0-3.2 and the value of Al₂O₃/PbO being within the range of 0.13-0.40, and which has an X-ray absorption coefficient of 40cm⁻¹ or more at 0.6 Å.

### Best Mode for Embodying the Invention

Now, description will be made of a CRT funnel glass for a cathode ray tube according to an embodiment of the present invention.

The funnel glass for a cathode ray tube described herein contains, in mass percent, 48-62% SiO₂, 1.4-4.1%Al₂O₃, 5-15% PbO, 0-2% MgO, 0.1-4% CaO, 3-8% SrO, 3-8% BaO, 0-2% ZnO, 4-9% Na₂O, 4-9% K₂O 0.3-2% ZrO₂, 0-1% TiO₂, 0-1% CeO₂, 0-2% Sb₂O₃, and 0-1% Fe₂O_{3.} The value of (SrO+BaO)/PbO is within the range of 1.0-3.2. The value of Al₂O₃/PbO is within the range of 0.13-0.40. In addition, the funnel glass has an X-ray absorption coefficient of 40cm⁻¹ or more at 0.6 Å.

If a large amount of glass pieces of a panel are used as a funnel glass material, the content of PbO is decreased so that the X-ray absorption coefficient is decreased. However, the above-mentioned funnel glass for a cathode ray tube contains SrO and BaO each of which has a content of 3-8 mass%, with the value of (SrO+BaO)/PbO being within the range of 1.0-3.2, so as to compensate the X-ray absorption coefficient. In addition, since the viscosity of the glass is increased by the decrease in content of PbO, the value of Al₂O₃/PbO is adjusted within the range of 0.13-0.40 so as to suppress the increase in viscosity of the glass.

Moreover, the above-mentioned funnel glass for a cathode ray tube contains, in mass percent, 5-15% PbO, 3-8% SrO, and 3-8% BaO. Therefore, it is possible to achieve an X-ray absorption coefficient as high as 40cm⁻¹ or more at 0.6Å. By making a glass material contain a crushed glass piece mixture of a bulb of a cathode ray tube at the content of 55 mass% (preferably 70 mass%), it is possible to consume the bulb of a cathode ray tube which should be recycled. It is noted here that, depending on an average composition of the crushed glass piece mixture, the mixture itself may be directly used as a prepared batch for a funnel glass without mixing with a material batch.

Following is the reasons for limiting the glass composition as mentioned above.

SiO₂ is a component which serves as a network former of the glass. If the content of SiO₂ is 48-62 mass%, forming of the funnel glass is facilitated. In addition, matching with a thermal expansion coefficient of a neck glass is improved. Preferably, the content of SiO₂ is within the range of 49-60 mass%.

Al₂O₃ is also a component which serves as a network former of the glass. If the content of Al₂O₃ is 1.4-4.1 mass%, forming of the funnel glass is facilitated. In addition, matching with the thermal expansion coefficient of the neck glass is improved. Preferably, the content of Al₂O₃ is within the range of 1.5-4 mass%.

PbO is a component which improves the X-ray absorption coefficient of the glass. If the content of PbO is 5-15 mass%, a sufficient X-ray absorbability can be obtained and the viscosity suitable for forming of the funnel glass can be achieved. Preferably, the content of PbO is within the range which is not smaller than 5.5 mass% and which is smaller than 10 mass%.

MgO is a component which serves to promote melting of the glass and to adjust the thermal expansion coefficient and the viscosity. If the content of MgO is 2 mass% or less, the glass is hardly devitrified and a liquid phase temperature is lowered so that forming of the funnel glass is facilitated. Preferably, the content of MgO is 1.9 mass% or less.

CaO is a component which serves to adjust the thermal expansion coefficient and the viscosity of the glass and to improve the water resistance of the glass. If the content of CaO is less than 0.1 mass%, the water resistance is deteriorated. On the other hand, if the content is increased, the glass tends to be devitrified. If the content of CaO is 4 mass% or less, the glass can be melted without being devitrified. Preferably, the content of CaO is within the range of 0.5-4 mass%.

SrO and BaO are components which serve to promote the melting of the glass, to adjust the thermal expansion coefficient and the viscosity, and to improve the X-ray absorbability. If the content of each of SrO and BaO is 3 mass% or more, it is possible to improve the X-ray absorption coefficient which is decreased by the use of glass pieces of a bulb glass of a cathode ray tube. On the other hand, if the content of each of SrO and BaO is increased, the glass tends to be devitrified. However, if the content of each component is 8 mass% or less, the glass can be melted without being devitrified. Preferably, the content of each of SrO and BaO is within the range of 3.5-8 mass%.

ZnO is a component which serves to improve the water resistance of the glass. If the content of ZnO is 2 mass% or less, the glass can be melted without being devitrified. Preferably, the content of ZnO is within the range of 0.1-1.5 mass%.

Na₂O and K₂O are components which serve to adjust the thermal expansion coefficient and the viscosity. If the content of each of Na₂O and K₂O is 4-9 mass%, matching with the thermal expansion coefficient of the neck glass is improved and the viscosity suitable for forming of the funnel glass can be obtained. Preferably, the content of each of Na₂O and K₂O is within the range of 4-8 mass%.

ZrO₂ is a component which serves to improve the X-ray absorption coefficient of the glass. If the content of ZrO₂ is less than 0.3 mass%, the effect of improving the X-ray absorption coefficient is small. On the other hand, if the content of ZrO₂ is increased, the glass tends to be devitrified. However, if the content of ZrO₂ is 2 mass% or less, the glass can be melted without being devitrified. Preferably, the content of ZrO₂ is within the range of 0.4-1.8 %.

TiO₂ is a component which serves to improve the water resistance of the glass. If the content of TiO₂ is 1 mass% or less, the glass can be melted without being devitrified. Preferably, the content of TiO₂ is 0.8 mass% or less.

CeO₂ is a component which serves as a fining agent. If the content of CeO₂ is increased, the glass is easily devitrified. However, the addition up to 1 mass% causes no problem. Preferably, the content of CeO₂ is 0.8 mass% or less.

Sb₂O₃ is a component which serves as a fining agent. If the content of Sb₂O₃ is increased, the glass is easily devitrified. However, the addition up to 2 mass% causes no problem. Preferably, the content of Sb₂O₃ is within the range of 0.05-1 mass%.

Fe₂O₃ is a component which serves to stabilize an infrared transmittance of a molten glass and to promote melting of the glass. If the content of Fe₂O₃ is increased, the infrared transmittance of the molten glass is decreased and devitrifying stones and the like tend to be produced when melting is carried out in a large melting furnace. However, if the content is 1 mass% or less, the glass can be melted without producing devitrifying stones and the like. Preferably, the content of Fe₂O₃ is within the range of 0.08-0.9 mass%.

In order to prevent the X-ray absorption coefficient from being decreased due to the use of the glass pieces of the bulb of a cathode ray tube, the value of (SrO+BaO)/PbO should be adjusted within the range of 1.0-3.2. If the value is less than 1.0, the X-ray absorption coefficient is decreased. On the other hand, if the value is greater than 3.2, the glass is easily devitrified. Preferably, the value is within the range of 1.0-2.9.

In order to suppress the increase in viscosity of the glass, the value of Al₂O₃/PbO should be adjusted within the range of 0.13-0.40. If the value is less than 0.13, the thermal expansion coefficient is increased so that matching with the thermal expansion coefficient of the neck glass is deteriorated. On the other hand, if the value is greater than 0.40, the viscosity of the glass is increased. Preferably, the value is within the range of 0.15-0.40.

Besides the above-mentioned components, Co₃O₄ and NiO may be contained as impurities up to 1 mass% each.

Next, description will be made about a method of producing the funnel glass for a cathode ray tube.

First, the bulb of a cathode ray tube is completely separated into individual parts, i.e., the panel, the funnel, and the neck and pins and a shadow mask are removed. Next, the glass is crushed per each material into a size of 1-10 mm to produce the glass pieces. The glass pieces are subjected to a chemical solution treatment or a blasting process to remove phosphors or carbon DAG which are adhered to the glass. Thereafter, the glass pieces are washed. Subsequently, the glass pieces of the panel, the funnel, and the neck are mixed in the ratio of 40-70 %, 25-50 %, and 1-10 %, respectively. Thus, the glass piece mixture can be obtained.

It is noted here that the glass piece mixture can be obtained by directly crushing the bulb of the cathode ray tube into a size of 1-10 mm, removing the phosphors and the carbon DAG, and thereafter carrying out washing. In this manner, it is possible to save time and labor for completely separating the bulb of the cathode ray tube into individual parts and to suppress the cost.

The glass piece mixture thus obtained is mixed with a material of the funnel glass to produce a prepared batch which has the above-mentioned composition. The prepared batch is melted in a melting furnace and formed so that the funnel glass for a cathode ray tube can be obtained.

Now, the funnel glass for a cathode ray tube according to the present invention will be described in detail in conjunction with examples.

Table 1 shows an average composition of the glass piece mixture of the crushed bulb glass of the cathode ray tube.

**Table 1**

| | average composition of crushed glass piece mixture (mass%) |
|---|---|
| SiO₂ | 58.8 |
| Al₂O₃ | 2.7 |
| PbO | 8.5 |
| MgO | 0.6 |
| CaO | 1.3 |
| SrO | 6.2 |
| BaO | 5.9 |
| ZnO | 0.3 |
| Na₂O | 6.5 |
| K₂O | 7.4 |
| ZrO₂ | 1.0 |
| TiO₂ | 0.3 |
| CeO₂ | 0.2 |
| Sb₂O₃ | 0.2 |
| Fe₂O₃ | 0.1 |

Examples (Samples Nos. 1-5) according to the present invention and comparative examples (Samples No. 6-7) are shown in Table 2 and Table 3, respectively.

**Table 2**

| | examples | | | | |
|---|---|---|---|---|---|
| | No.1 | No. 2 | No. 3 | No. 4 | No. 5 |
| composition (mass%) | | | | | |
| SiO₂ | 57.70 | 56.60 | 57.21 | 55.90 | 58.80 |
| Al₂O₃ | 3.65 | 3.30 | 3.10 | 2.60 | 2.70 |
| PbO | 9.90 | 9.90 | 9.95 | 9.90 | 8.50 |
| MgO | 1.15 | 0.95 | 0.80 | 0.60 | 0.60 |
| CaO | 2.20 | 2.05 | 1.80 | 1.30 | 1.30 |
| SrO | 5.10 | 6.00 | 6.00 | 6.70 | 6.20 |
| BaO | 4.80 | 5.50 | 5.30 | 6.60 | 5.90 |
| ZnO | 0.15 | 0.20 | 0.20 | 0.30 | 0.30 |
| Na₂O | 6.50 | 6.50 | 6.50 | 6.50 | 6.50 |
| K₂O | 7.75 | 7.65 | 7.60 | 7.80 | 7.40 |
| ZrO₂ | 0.60 | 0.70 | 0.80 | 1.00 | 1.00 |
| TiO₂ | 0.15 | 0.20 | 0.20 | 0.30 | 0.30 |
| CeO₂ | 0.10 | 0.10 | 0.20 | 0.20 | 0.20 |
| Sb₂O₃ | 0.20 | 0.10 | 0.20 | 0.20 | 0.20 |
| Fe₂O₃ | 0.05 | 0.10 | 0.09 | 0.10 | 0.10 |
| thermal expansion | | | | | |
| coefficient [30-380°C] | 100 | 100 | 100 | 101 | 100 |
| (x10⁻⁷/°C) | | | | | |
| annealing point (°C) | 501 | 501 | 500 | 500 | 502 |
| forming temperature (°C) | 990 | 989 | 989 | 990 | 992 |
| X-ray absorption Coefficient (0.6Å, cm⁻¹) | 47 | 47 | 47 | 47 | 44 |
| amount of cathode ray tube bulb glass used (%) | 55 | 70 | 80 | 95 | 100 |

**Table 3**

| | comparative examples | |
|---|---|---|
| | No. 6 | No. 7 |
| composition (mass%) | | |
| SiO₂ | 52.90 | 53.00 |
| Al₂O₃ | 4.00 | 3.80 |
| PbO | 9.00 | 8.50 |
| MgO | 3.00 | 2.50 |
| CaO | 5.00 | 4.50 |
| SrO | 3.80 | 4.30 |
| BaO | 3.00 | 3.70 |
| ZnO | 0.15 | 0.20 |
| Na₂O | 8.00 | 8.00 |
| K₂O | 10.00 | 10.00 |
| ZrO₂ | 0.60 | 0.70 |
| TiO₂ | 0.20 | 0.30 |
| CeO₂ | 0.10 | 0.20 |
| Sb₂O₃ | 0.20 | 0.20 |
| Fe₂O₃ | 0.05 | 0.10 |
| thermal expansion | | |
| coefficient [30-380°C] | 100 | 100 |
| (x10⁻⁷/°C) | | |
| annealing point (°C) | 506 | 507 |
| forming temperature (°C) | 971 | 971 |
| X-ray absorption coefficient(0.6Å, cm⁻¹) | 39 | 39 |
| amount of cathode ray | 55 | 70 |
| tube bulb glass used(%) | | |

Each sample given in Tables was prepared in the following manner.

First, the crushed glass piece mixture of the cathode ray tube having an average composition shown in Table 1 was prepared. So as to obtain the compositions shown in Table 2 and Table 3, a prepared batch was produced by mixing the glass piece mixture with a material batch in Samples Nos. 1-4, 6, and 7 and by the use of 100 % of the glass piece mixture in Sample No. 5. Next, the prepared batch was put into a platinum crucible. The prepared batch was melted in a melting furnace under the condition of 1550°C for 4 hours. In order to obtain a homogeneous glass, degassing was performed by stirring using a platinum stirring bar for 3 minutes in the middle of melting. Thereafter, the molten glass was formed into a predetermined shape, and then gradually cooled.

For each sample obtained as mentioned above, a thermal expansion coefficient, an annealing point, a forming temperature, and an X-ray absorption coefficient were measured. The results are shown in Tables.

The thermal expansion coefficient was measured by the use of a dilatometer as an average thermal expansion coefficient at 30-380°C. In addition, the annealing point was measured in accordance with ASTM C336. The forming temperature was measured by a platinum ball pulling method as a temperature corresponding to a glass viscosity of 10⁴dPa· s.

The X-ray absorption coefficient was obtained by calculating the absorption coefficient with respect to a wavelength of 0.6 angstrom with reference to the glass composition and the density.

As is apparent from Table 2, each of Samples Nos. 1-5 as the examples of the present invention had an X-ray absorption coefficient as high as 47 cm⁻¹ because the content of each of SrO and BaO is 3-8 % and the value of (SrO+BaO)/PbO is within the range of 1.0-3.2. The annealing point was 500-502°C and the forming temperature was 989-992°C because the value of Al₂O₃/PbO is within the range of 0.13-0.40. The thermal expansion coefficient was 100-101 x 10⁻⁷/°C. Thus, even if a large amount of the bulb glass of a cathode ray tube is used as the material of the funnel glass without separation into individual parts, it is possible to produce the funnel glass without changing its characteristics.

On the other hand, each of Samples No. 6 and No. 7 as the comparative examples had an X-ray absorption coefficient as low as 39 cm⁻¹ and an annealing point as high as 506°C or more.

### Industrial Applicability

The funnel glass for a cathode ray tube according to the present invention is suitable as the glass for use in producing the funnel of a cathode ray tube.

## Claims

1. A funnel glass for a cathode ray tube, which contains, in mass percent, 48-62% SiO₂, 1.4-4.1% Al₂O₃, 5-15% PbO, 0-2% MgO, 0.1-4% CaO, 3-8% SrO, 3-8% BaO, 0-2% ZnO, 4-9% Na₂O, 4-9% K₂O 0.3-2% ZrO₂, 0-1% TiO₂, 0-1% CeO₂, 0-2% Sb₂O₃, and 0-1% Fe₂O₃ with the value of (SrO+BaO)/PbO being within the range of 1.0-3.2 and the value of Al₂O₃/PbO being within the range of 0.13-0.40, and which has an X-ray absorption coefficient of 40cm⁻¹ or more at 0.6Å.

2. A funnel glass for a cathode ray tube as claimed in claim 1, wherein said funnel glass is produced by the use of a glass material containing 55 mass% of a glass piece mixture of a panel, a funnel, and a neck which form a bulb of a cathode ray tube.

3. A funnel glass for a cathode ray tube as claimed in claim 2, wherein said glass material contains 70 mass% or more of said glass mixture.

4. A funnel glass for a cathode ray tube as claimed in claim 1, wherein the content of SiO₂ is within the range of 49-60 mass%.

5. A funnel glass for a cathode ray tube as claimed in claim 1, wherein the content of Al₂O₃ is within the range of 1.5-4 mass%.

6. A funnel glass for a cathode ray tube as claimed in claim 1, wherein the content of PbO is within the range which is not smaller than 5.5 mass% and which is smaller than 10 mass%.

7. A funnel glass for a cathode ray tube as claimed in claim 1, wherein the content of MgO is 1.9 mass% or less.

8. A funnel glass for a cathode ray tube as claimed in claim 1, wherein the content of CaO is within the range of 0.5-4 mass%.

9. A funnel glass for a cathode ray tube as claimed in claim 1, wherein the content of each of SrO and BaO is within the range of 3.5-8 mass%.

10. A funnel glass for a cathode ray tube as claimed in claim 1, wherein the content of ZnO is within the range of 0.1-1.5 mass%.

11. A funnel glass for a cathode ray tube as claimed in claim 1, wherein the content of each of Na₂O and K₂O is within the range of 4-8 mass%.

12. A funnel glass for a cathode ray tube as claimed in claim 1, wherein the content of ZrO₂ is within the range of 0.4-1.8 mass%.

13. A funnel glass for a cathode ray tube as claimed in claim 1, wherein the content of each of TiO₂ and CeO₂ is 0.8 mass% or less.

14. A funnel glass for a cathode ray tube as claimed in claim 1, wherein the content of Sb₂O₃ is within the range of 0.05-1 mass%.

15. A funnel glass for a cathode ray tube as claimed in claim 1, wherein the content of Fe₂O₃ is within the range of 0.08-0.9 mass%.

16. A funnel glass for a cathode ray tube as claimed in claim 1, wherein the value of (SrO+BaO)/PbO is within the range of 1.0-2.9.

17. A funnel glass for a cathode ray tube as claimed in claim 1, wherein the value of Al₂O₃/PbO is within the range of 0.15-0.40.

18. A funnel glass for a cathode ray tube as claimed in claim 1, wherein each of Co₃O₄ and NiO is contained as impurities up to 1 % each.
